# EUROPEAN PATENT APPLICATION

(11) **EP 4 606 223 A1**
(43) Date of publication of application: **27.08.2025**
(21) Application number: 23879819.3
(22) Date of filing: 18.10.2023
(51) Int. Cl.: A23K 20/10, A23K 50/80

(54) **ADDITIVE COMPOSITION FOR FEED**

(30) Priority: 19.10.2022 JP 2022167856
(71) Applicant: Kao Corporation, Chuo-ku, Tokyo 103-8210 (JP)
(72) Inventor: UI Takahito, Wakayama-shi, Wakayama 640-8580 (JP)
(74) Representative: Hoffmann Eitle
(86) International application number: PCT/JP2023/037654
(87) International publication number: WO 2024/085176

(57) **Abstract**

Provided are a feed additive composition and a feed composition capable of promoting the digestion of proteins in fish and shellfish or the like which ingest protein-containing feeds.

A feed additive composition composed of (A) an anionic surfactant and (B) a nonionic surfactant, wherein a mass ratio of a content of component (A) to a content of component (B) [(A)/(B)] is 0.7 or more and 20 or less.

## Description

### Field of the Invention

The present invention relates to a feed additive composition and a feed composition.

### Background of the Invention

In the recent aquaculture scene, while feeding compound feeds for fish and shellfish such as pellets or the like has become mainstreamed in place of conventional live bait, the development of superior aquaculture feeds has been underway to achieve improvement in the quality of fish and shellfish.

JP-A 2003-235471 discloses a method for producing solid feed characterized in that an emulsion obtained by emulsifying an aqueous solution of a water-soluble macromolecule and fish oil with an emulsifier (a polyoxyethylene sorbitan fatty acid ester or the like) is added to feedstuffs. JP-A H3-290156 discloses a method for producing dry pellets characterized in that dry pellets with a content of oil and fat of 10-50 weight% are produced by adding a nonionic surfactant (a polyoxyethylene glycerin fatty acid ester or the like) in an amount of 0.1-10 weight% relative to the oil and fat. JP-A S59-66844 discloses a live bait feed composition characterized in that the live bait contains thiamine or a thiamine salt (thiamine nitrate or the like) coated with a coating agent composed of an oil or a fat having a melting point of 50-80°C and lecithin, or composed of an oil or a fat having a melting point of 50-80°C, lecithin, and a polyglycerol polymerized-fatty acid ester, an amount of the coating agent being 1/3-1 time an amount of thiamine or the thiamine salt, and discloses that the feed composition is capable of preventing thiamine deficiency of fish.

### Summary of the Invention

An example of the development of feeds for fish and shellfish farming (hereinafter referred to as feeds for fish farming) is a means to achieve weight gain of individual fish and shellfish, which requires promoting the digestion of proteins in the bodies of fish and shellfish. Thus, a problem to be solved by the present invention is to provide a feed additive composition and a feed composition capable of promoting the digestion of proteins in fish and shellfish or the like which ingest protein-containing feeds.

In one embodiment, the present invention provides a feed additive composition composed of (A) an anionic surfactant [hereinafter referred to as component (A)] and (B) a nonionic surfactant [hereinafter referred to as component (B)], wherein a mass ratio of a content of component (A) to a content of component (B) [(A)/(B)] is 0.7 or more and 20 or less.

In another embodiment, the present invention also provides a feed composition containing (A) an anionic surfactant [hereinafter referred to as component (A)], (B) a nonionic surfactant [hereinafter referred to as component (B)], and (C) protein [hereinafter referred to as component (C)], wherein a mass ratio of a content of component (A) to a content of component (B) [(A)/(B)] is 0.7 or more and 20 or less.

The feed additive composition and the feed composition of the present invention are capable of achieving improvement in the quality of fish and shellfish by promoting the digestion of proteins in fish and shellfish or the like which ingest protein-containing feeds.

### Embodiments of the Invention

### [Feed additive composition]

The feed additive composition of the present invention is a feed additive composition composed of (A) an anionic surfactant and (B) a nonionic surfactant, wherein a mass ratio of a content of component (A) to a content of component (B) [(A)/(B)] is 0.7 or more and 20 or less.

In the feed additive composition of the present invention, component (A) is capable of promoting the digestibility of proteins by acting on the proteins to change the structure thereof.

Examples of component (A) include, for example, one or more selected from alkyl sulfates, alkylbenzene sulfonates, alkyl sulfosuccinates, and cholates. The salts of component (A) may preferably be alkali metal salts such as sodium salts, potassium salts, or the like, or thiamine salts.

The alkyl sulfates may have an alkyl group with preferably 8 or more and further preferably 10 or more, and 18 or less and further preferably 16 or less carbons from the viewpoint of improving digestibility. The alkyl sulfates may have either a linear or a branched alkyl group, and may preferably have a linear alkyl group from the viewpoint of improving digestibility.

In the present invention, alkyl sulfates having a linear alkyl group with 10 or more and 16 or less carbons are preferable. While examples of a salt constituting the alkyl sulfates can include an alkali metal salt such as sodium, potassium, or the like, an alkanol amine salt, a thiamine salt, or the like, a sodium salt may be preferable from the viewpoint of improving digestibility, and a thiamine salt may be preferable from the viewpoint of improving feed ingestibility.

While thiamine is also known as vitamin B1, and formulating feed with vitamin B1 to produce livestock with an increased vitamin B1 content is known, a technology of promoting the digestion of protein-containing feeds by formulating the feeds to be fed with such an anionic surfactant as a thiamine salt was unknown.

The alkylbenzene sulfonates may have an alkyl group with preferably 8 or more and further preferably 10 or more, and preferably 18 or less and further preferably 16 or less carbons from the viewpoint of improving digestibility. The alkylbenzene sulfonates may have either a linear or a branched alkyl group, and may preferably have a linear alkyl group from the viewpoint of improving digestibility.

In the present invention, the alkylbenzene sulfonates are preferably alkylbenzene sulfonates having a linear alkyl group with 10 or more and 16 or less carbons. While examples of a salt constituting the alkylbenzene sulfonates can include an alkali metal salt such as sodium, potassium, or the like, a thiamine salt, or the like, a sodium salt may be preferable from the viewpoint of improving digestibility, and a thiamine salt may be preferable from the viewpoint of improving feed ingestibility.

The alkyl sulfosuccinates may have an alkyl group with preferably 6 or more and further preferably 8 or more, and preferably 18 or less and further preferably 16 or less carbons from the viewpoint of improving digestibility. The alkyl sulfosuccinates may have either a linear or a branched alkyl group, and may preferably have a linear alkyl group from the viewpoint of improving digestibility. The alkyl sulfosuccinates may preferably be diester-type compounds having two alkyl groups (hereinafter referred to as dialkyl sulfosuccinates). The two alkyl groups of the dialkyl sulfosuccinates may have preferably 10 or more and further preferably 12 or more, and preferably 24 or less and further preferably 20 or less carbons in total from the viewpoint of improving digestibility. The two alkyl groups of the dialkyl sulfosuccinates may have the same number or different numbers of carbons. While examples of a salt constituting the alkyl sulfosuccinates and the dialkyl sulfosuccinates can include an alkali metal salt such as sodium, potassium, or the like, and others, a sodium salt may be preferable from the viewpoint of improving digestibility.

While examples of a salt constituting the cholates can include an alkali metal salt such as sodium, potassium, or the like, and others, a sodium salt may be preferable from the viewpoint of improving digestibility.

Component (A) may preferably be sodium lauryl sulfate or thiamine lauryl sulfate from the viewpoint of improving digestibility. Further, thiamine lauryl sulfate may be preferable from the viewpoint of improving feed ingestibility.

In the feed additive composition of the present invention, an amount of each component used is determined with reference to a total protein amount in feed to which the composition is added. A content of component (A) relative to 100 parts by mass of protein in the feed may be preferably 0.1 parts by mass or more, more preferably 0.2 parts by mass or more, further preferably 0.5 parts by mass or more, furthermore preferably 1 part by mass or more, furthermore preferably 2 parts by mass or more, and furthermore preferably 3 parts by mass or more from the viewpoint of improving digestibility, and preferably 50 parts by mass or less, more preferably 40 parts by mass or less, further preferably 30 parts by mass or less, furthermore preferably 20 parts by mass or less, and furthermore preferably 15 parts by mass or less from the viewpoints of improving feed ingestibility and economy. The amount of the anionic surfactant of component (A) is an amount based on a compound with a counterion replaced by a sodium ion.

The feed additive composition of the present invention contains component (B), in other words, a nonionic surfactant.

Component (B) may preferably be a nonionic surfactant with an HLB of 6 or more and 18 or less from the viewpoint of improving digestibility. An HLB of component (B) may be preferably 6 or more, more preferably 8 or more, further preferably 10 or more, and furthermore preferably 13 or more, and preferably 18 or less, more preferably 17 or less, and further preferably 16.5 or less from the viewpoint of improving digestibility.

In the present invention, a nonionic surfactant with an HLB of 10 or more and 17 or less is preferable.

The HLB of component (B) is determined by Griffin's formula shown below. HLB = 20 × (sum total of formula weights of hydrophilic parts of nonionic surfactant)/(molecular weight of nonionic surfactant)

If two or more nonionic surfactants are contained, the HLB of component (B) is determined as a weighted average.

Examples of component (B) include, for example, one or more selected from polyoxyethylene alkyl ethers, sorbitan fatty acid esters, polyoxyethylene sorbitan fatty acid esters, polyoxyethylene fatty acid esters, sucrose fatty acid esters, glycerin fatty acid esters, polyoxyethylene glycerin fatty acid esters, and polyoxyethylene hydrogenated castor oils.

The polyoxyethylene alkyl ethers may have an alkyl group with preferably 8 or more and further preferably 10 or more, and preferably 20 or less, more preferably 18 or less, and further preferably 16 or less carbons from the viewpoint of improving digestibility. The polyoxyethylene alkyl ethers may have either a linear or a branched alkyl group, and may preferably have a linear alkyl group from the viewpoint of improving digestibility. An average number of added moles of ethylene oxide of the polyoxyethylene alkyl ethers may be preferably 2 or more and further preferably 8 or more, and preferably 50 or less, more preferably 45 or less, and further preferably 40 or less from the viewpoint of improving digestibility.

In the present invention, polyoxyethylene alkyl ethers having an alkyl group with 10 or more and 16 or less carbons and having an average number of added moles of ethylene oxide of 8 or more and 40 or less are preferable.

A fatty acid in a fatty acid-derived constituent unit constituting the sorbitan fatty acid esters and the polyoxyethylene sorbitan fatty acid esters may have preferably 8 or more and further preferably 10 or more, and preferably 20 or less and further preferably 18 or less carbons from the viewpoint of improving digestibility. The fatty acid in a fatty acid-derived constituent unit constituting the sorbitan fatty acid esters and the polyoxyethylene sorbitan fatty acid esters may be either linear or branched, and may preferably be a linear fatty acid. Further, the fatty acid may be either a saturated or an unsaturated fatty acid, and mixed fatty acids can be used.

Examples of an ester constituting the sorbitan fatty acid esters and the polyoxyethylene sorbitan fatty acid esters include a monoester, a diester, and a triester, and a monoester may be preferable.

An average number of added moles of ethylene oxide of the polyoxyethylene sorbitan fatty acid esters may be preferably 2 or more and further preferably 5 or more, and preferably 40 or less and further preferably 25 or less from the viewpoint of improving digestibility.

In the present invention, polyoxyethylene sorbitan fatty acid (mono)esters having a linear fatty acid with 10 or more and 18 or less carbons as a constituent and having an average number of added moles of ethylene oxide of 5 or more and 25 or less are preferable.

A fatty acid in a fatty acid-derived constituent unit constituting the polyoxyethylene fatty acid esters may have preferably 6 or more and further preferably 8 or more, and preferably 20 or less and further preferably 18 or less carbons from the viewpoint of improving digestibility. The fatty acid in a fatty acid-derived constituent unit constituting the polyoxyethylene fatty acid esters may be either linear or branched, and may preferably be a linear fatty acid. Further, the fatty acid may be either a saturated or an unsaturated fatty acid, and mixed fatty acids can be used. An average number of added moles of ethylene oxide of the polyoxyethylene fatty acid esters may be preferably 2 or more and further preferably 10 or more, and preferably 50 or less and further preferably 40 or less from the viewpoint of improving digestibility.

In the present invention, polyoxyethylene fatty acid esters having a linear fatty acid with 8 or more and 18 or less carbons as a constituent and having an average number of added moles of ethylene oxide of 10 or more and 40 or less are preferable.

A fatty acid in a fatty acid-derived constituent unit constituting the sucrose fatty acid esters may have preferably 8 or more and further preferably 10 or more, and preferably 20 or less and further preferably 18 or less carbons from the viewpoint of improving digestibility. The fatty acid in a fatty acid-derived constituent unit constituting the sucrose fatty acid esters may be either linear or branched, and may preferably be a linear fatty acid. Further, the fatty acid may be either a saturated or an unsaturated fatty acid, and mixed fatty acids can be used.

In the present invention, sucrose fatty acid esters having a linear fatty acid with 8 or more and 18 or less carbons as a constituent are preferable.

A fatty acid in a fatty acid-derived constituent unit constituting the glycerin fatty acid esters and the polyoxyethylene glycerin fatty acid esters may have preferably 6 or more and further preferably 8 or more, and preferably 20 or less and further preferably 18 or less carbons from the viewpoint of improving digestibility. The fatty acid in a fatty acid-derived constituent unit constituting the glycerin fatty acid esters and the polyoxyethylene glycerin fatty acid esters may be either linear or branched, and may preferably be a linear fatty acid from the viewpoint of improving digestibility. Further, the fatty acid may be either a saturated or an unsaturated fatty acid, and mixed fatty acids can be used. Examples of an ester constituting the glycerin fatty acid esters and the polyoxyethylene glycerin fatty acid esters include a monoester, a diester, and a triester, and a monoester may be preferable.

An average number of added moles of ethylene oxide of the polyoxyethylene glycerin fatty acid esters may be preferably 2 or more and further preferably 10 or more, and preferably 50 or less and further preferably 40 or less from the viewpoint of improving digestibility.

In the present invention, polyoxyethylene glycerin fatty acid esters having a linear fatty acid with 8 or more and 18 or less carbons as a constituent and having an average number of added moles of ethylene oxide of 10 or more and 40 or less are preferable.

An average number of added moles of ethylene oxide of the polyoxyethylene hydrogenated caster oils may be preferably 2 or more, more preferably 10 or more, and further preferably 20 or more, and preferably 50 or less and further preferably 45 or less from the viewpoint of improving digestibility.

From the viewpoint of improving digestibility, component (B) is preferably a nonionic surfactant having ethylene oxide and preferably with an HLB of 6 or more and 18 or less, and examples include, for example, a polyoxyethylene alkyl ether, a polyoxyethylene sorbitan fatty acid ester, a polyoxyethylene fatty acid ester, a polyoxyethylene glycerin fatty acid ester, a polyoxyethylene hydrogenated castor oil, and others. From the viewpoint of improving digestibility, preferable examples include a polyoxyethylene alkyl ether, a polyoxyethylene sorbitan fatty acid ester, and a polyoxyethylene glycerin fatty acid ester.

Further, specific examples of component (B) include polyoxyethylene lauryl ether, sorbitan laurate, polyoxyethylene sorbitan laurate, polyoxyethylene sorbitan oleate, glyceryl monocaprate, and others.

Examples of component (B) preferably include polyoxyethylene lauryl ether and polyoxyethylene sorbitan oleate from the viewpoint of improving digestibility, and preferably include polyoxyethylene sorbitan laurate, polyoxyethylene sorbitan oleate, and glyceryl monocaprate from the viewpoint of improving feed ingestibility.

In the feed additive composition of the present invention, an amount of each component used is determined with reference to a total protein amount in feed to which the composition is added. A content of component (B) relative to 100 parts by mass of protein in the feed may be preferably 0.1 parts by mass or more, more preferably 0.2 parts by mass or more, further preferably 0.5 parts by mass or more, furthermore preferably 1 part by mass or more, and furthermore preferably 2 parts by mass or more from the viewpoint of improving digestibility, and 20 parts by mass or less and preferably 15 parts by mass or less from the viewpoints of improving feed ingestibility and economy.

In the feed additive composition of the present invention, a mass ratio of a content of component (A) to a content of component (B) [(A)/(B)] may be 0.7 or more, preferably 0.9 or more, more preferably 1.0 or more, and further preferably 2.0 or more, and 20 or less, preferably 10 or less, and further preferably 6 or less from the viewpoint of improving digestibility. Further, a mass ratio of a content of component (A) to a content of component (B) [(A)/(B)] may be 20 or less, preferably 10 or less, more preferably 8 or less, and further preferably 5.0 or less from the viewpoint of improving feed ingestibility.

The feed additive composition of the present invention may be prepared by mixing the anionic surfactant of component (A) and the nonionic surfactant of component (B) at a mass ratio [(A)/(B)] of 0.7 or more and 20 or less.

The feed additive composition of the present invention may be either in solid form or in liquid form.

### [Feed composition]

The feed composition of the present invention contains the above feed additive composition and protein. Further, the feed composition of the present invention is a feed composition containing (A) an anionic surfactant, (B) a nonionic surfactant, and (C) protein, wherein a mass ratio of a content of component (A) to a content of component (B) [(A)/(B)] is 0.7 or more and 20 or less. Specific examples, preferable examples, and others of components (A) and (B) in the feed composition of the present invention may be the same as described in the feed additive composition of the present invention.

The protein of component (C) may be plant proteins or animal proteins, and may contain both plant proteins and animal proteins. Examples of protein sources of the plant proteins include, for example, soybean meal, corn gluten meal, corn, milo, barley, wheat, cassava, bran, rice bran, rapeseed meal, feed rice, and others, and are not particularly limited thereto, but soybean meal may be preferable from the viewpoint of economy. Examples of protein sources of the animal proteins include, for example, fish meal, conditioned fish meal, fish lees, skimmed milk powder, whey powder, chicken meal, feather meal, meat meal, meat and bone meal, and others.

The feed composition of the present invention may preferably contain plant proteins as component (C), and is preferably a feed composition containing plant proteins.

The feed composition of the present invention may preferably contain plant proteins and animal proteins as component (C).

The feed composition of the present invention can contain, in protein contained in the composition, in other words, in component (C), animal proteins in an amount of preferably 5 mass% or more, more preferably 10 mass% or more, and further preferably 20 mass% or more from the viewpoint of improving growth performance, and preferably 80 mass% or less, more preferably 60 mass% or less, and further preferably 50 mass% or less from the viewpoint of economy.

If the feed composition of the present invention contains plant proteins and animal proteins as component (C), a mass ratio of an animal protein content to a total protein amount in the feed composition [animal protein/protein] may be, for example, 0.1 or more, more preferably 0.2 or more, and further preferably 0.4 or more from the viewpoint of improving digestibility, and 0.8 or less, preferably 0.7 or less, and more preferably 0.6 or less from the viewpoint of economy.

The feed composition of the present invention may contain component (C) in an amount of preferably 10 mass% or more, more preferably 20 mass% or more, further preferably 30 mass% or more, and furthermore preferably 40 mass% or more, and preferably 99 mass% or less, more preferably 97 mass% or less, further preferably 90 mass% or less, furthermore preferably 80 mass% or less, furthermore preferably 70 mass% or less, and furthermore preferably 60 mass% or less from the viewpoint of growth performance.

The feed composition of the present invention may contain component (A) in an amount relative to 100 parts by mass of component (C) of preferably 0.1 parts by mass or more, more preferably 0.2 parts by mass or more, further preferably 0.5 parts by mass or more, furthermore preferably 1 part by mass or more, furthermore preferably 2 parts by mass or more, and furthermore preferably 3 parts by mass or more from the viewpoint of improving digestibility, and 50 parts by mass or less, preferably 40 parts by mass or less, further preferably 30 parts by mass or less, further preferably 20 parts by mass or less, and furthermore preferably 15 parts by mass or less from the viewpoints of improving feed ingestibility and economy.

The feed composition of the present invention may contain component (B) in an amount relative to 100 parts by mass of component (C) of 0.1 parts by mass or more, preferably 0.2 parts by mass or more, more preferably 0.5 parts by mass or more, further preferably 1 part by mass or more, and furthermore preferably 2 parts by mass or more from the viewpoint of improving digestibility, and 20 parts by mass or less and preferably 15 parts by mass or less from the viewpoints of improving feed ingestibility and economy.

In the feed composition of the present invention, a mass ratio of a content of component (A) to a content of component (B) [(A)/(B)] may be 0.7 or more, preferably 0.9 or more, more preferably 1.0 or more, and further preferably 2.0 or more, and 20 or less, preferably 10 or less, and more preferably 6 or less from the viewpoint of improving digestibility. Further, from the viewpoint of improving feed ingestibility, a mass ratio of a content of component (A) to a content of component (B) [(A)/(B)] may be 20 or less, preferably 10 or less, more preferably 8 or less, furthermore preferably 5.0 or less, and furthermore preferably 4.0 or less.

The feed composition of the present invention can contain, in addition to components (A), (B), and (C), the following components as optional components. Examples include, for example, excipients such as starch, carboxy methyl cellulose or the like, ashes such as vitamins (excluding vitamin B1), minerals or the like, dietary fiber, lipid, carbohydrates, yeasts such as torula yeast or the like, amino acids such as methionine or the like, and others. A surfactant other than components (A) and (B), in other words, a cationic surfactant, an amphoteric surfactant or the like can be contained as an optional component.

In the feed composition of the present invention, a content ratio of a total of a content of component (A) and a content of component (B) in 100 mass% of all surfactants contained in the feed composition may be preferably 80 mass% or more, more preferably 90 mass% or more, and further preferably 95 mass% or more.

The feed composition of the present invention may be produced by mixing components (A) and (B) with component (C) at a mass ratio of a content of component (A) to a content of component (B) [(A)/(B)] in a range of 0.7 or more and 20 or less.

Further, the feed composition of the present invention may be produced by adding component (A) at a content of 0.1 parts by mass or more and 50 parts by mass or less and component (B) at a content of 0.1 parts by mass or more and 20 parts by mass or less relative to 100 parts by mass of component (C) and at a mass ratio of the content of component (A) to the content of component (B) [(A)/(B)] of 0.7 or more and 20 or less, adding other components as necessary, and performing molding, or the like.

While forms of the feed composition of the present invention are not limited, examples include solid form, particularly, pellet form, granule form, and powder form. Examples of the pellet form include moist pellets, dry pellets, single moist pellets, extruded pellets, and others.

If the feed composition of the present invention is a solid feed composition for fish farming, a particle size (long diameter) of the solid feed composition may be, for example, preferably 0.5 mm or more and further preferably 1.0 mm or more, although it can be adjusted depending on the type of fish to be fed.

If the solid feed composition of the present invention is in the form of single moist pellets or in the form of moist pellets, a moisture content in 100 mass% of the composition may be preferably 10 mass% or more and further preferably 20 mass% or more from the viewpoint of improving shape retention performance and granulation performance, and preferably 70 mass% or less and further preferably 60 mass% or less from the viewpoint of improving storage performance and from the viewpoint of economy. If the solid feed composition of the present invention is in the form of dry pellets or in the form of extruded pellets, a moisture content in 100 mass% of the composition may be preferably 1 mass% or more and further preferably 3 mass% or more from the viewpoint of improving shape retention performance and granulation performance, and preferably 40 mass% or less and further preferably 30 mass% or less from the viewpoint of improving storage performance and from the viewpoint of economy.

The feed composition of the present invention may preferably be a feed composition for fish farming. Fish and shellfish to which the feed composition for fish farming of the present invention is fed are preferably fish, and examples include, for example, Japanese amberjack, juvenile Japanese amberjack, red seabream, greater amberjack, tuna, flounder, striped horse mackerel, horse mackerel, Japanese pufferfish, yellowtail amberjack, barred knifejaw, thread-sail filefish, black seabream, longtooth grouper, chub mackerel, convict grouper, and others, and are not particularly limited thereto.

### [Method for farming fish and shellfish]

The present invention provides a method for farming fish and shellfish including feeding the above feed composition to the farmed fish and shellfish. Examples of the method for farming fish and shellfish in the present invention include a method for farming fish and shellfish performed as usual except that feed for fish farming containing the feed additive composition of the present invention, and the feed composition of the present invention are fed.

### [Protein digestion promoter composition]

The present invention is based on the finding that the digestion of proteins ingested from feed in livestock such as fish and shellfish, chickens, pigs, cattle, and others can be promoted by containing the anionic surfactant of component (A) and the nonionic surfactant of component (B) in a protein-containing composition at a mass ratio of a content of component (A) to a content of component (B) [(A)/(B)] of 0.7 or more and 20 or less. In other words, the present invention provides a protein digestion promoter composition containing (A) an anionic surfactant and (B) a nonionic surfactant, wherein a mass ratio of a content of component (A) to a content of component (B) [(A)/(B)] is 0.7 or more and 20 or less. The protein digestion promoter composition of the present invention may be used for fish farming, poultry farming, pig farming, and cattle farming, and may preferably be used for fish farming.

The protein digestion promoter composition of the present invention may be a plant protein digestion promoter composition, may be a protein digestion promoter composition for fish farming, and may be a plant protein digestion promoter composition for fish farming. Specific examples, preferable examples, and others of components (A) and (B) in the promoter composition of the present invention may be the same as described in the feed additive composition and the feed composition of the present invention.

It can be confirmed that the protein digestion promoter composition of the present invention serves as a protein digestion promoter composition by checking, for example, the protein degradation rate, for example, in an In vitro or an In vivo test, as demonstrated in the Examples described later. The protein digestion promoter composition of the present invention can be prepared in the same manner as the feed additive composition of the present invention.

The present invention discloses the following feed additive composition, feed composition, method for farming fish and shellfish, and protein digestion promoter composition.
<1> A feed additive composition composed of (A) an anionic surfactant [hereinafter referred to as component (A)] and (B) a nonionic surfactant [hereinafter referred to as component (B)], wherein a mass ratio of a content of component (A) to a content of component (B) [(A)/(B)] is 0.7 or more and 20 or less.
<2> The feed additive composition according to the above <1>, wherein component (A) is an anionic surfactant selected from alkyl sulfates, alkylbenzene sulfonates, alkyl sulfosuccinates, and cholates.
<3> The feed additive composition according to the above <1> or <2>, containing component (A) in an amount of 0.1 parts by mass or more and 50 parts by mass or less relative to 100 parts by mass of protein in feed.
<4> The feed additive composition according to any of the above <1> to <3>, wherein an HLB of component (B) is 6 or more and 18 or less.
<5> The feed additive composition according to any of the above <1> to <4>, wherein an HLB of component (B) is 6 or more, further 8 or more, further 10 or more, and further 13 or more, and 18 or less, further 17 or less, and further 16.5 or less.
<6> The feed additive composition according to any of the above <1> to <5>, wherein component (B) is a nonionic surfactant selected from polyoxyethylene alkyl ethers, sorbitan fatty acid esters, polyoxyethylene sorbitan fatty acid esters, polyoxyethylene fatty acid esters, sucrose fatty acid esters, glycerin fatty acid esters, polyoxyethylene glycerin fatty acid esters, and polyoxyethylene hydrogenated castor oils.
<7> The feed additive composition according to any of the above <1> to <6>, containing component (B) in an amount of 0.1 parts by mass or more and 20 parts by mass or less relative to 100 parts by mass of protein in feed.
<8> The feed additive composition according to any of the above <1> to <7>, containing component (B) in an amount of 0.1 parts by mass or more, further 0.2 parts by mass or more, further 0.5 parts by mass or more, further 1 part by mass or more, and further 2 parts by mass or more, and 20 parts by mass or less and further 15 parts by mass or less relative to 100 parts by mass of protein in feed.
<9> The feed additive composition according to any of the above <1> to <8>, wherein a mass ratio of a content of component (A) to a content of component (B) [(A)/(B)] is 0.7 or more, further 0.9 or more, further 1.0 or more, and further 2.0 or more, and 20 or less, further 10 or less, further 8 or less, further 6 or less, and further 5.0 or less.
<10> The feed additive composition according to any of the above <1> to <9>, wherein the composition is used for feed for fish and shellfish farming.
<11> A feed composition containing (A) an anionic surfactant [hereinafter referred to as component (A)], (B) a nonionic surfactant [hereinafter referred to as component (B)], and (C) protein [hereinafter referred to as component (C)], wherein a mass ratio of a content of component (A) to a content of component (B) [(A)/(B)] is 0.7 or more and 20 or less.
<12> The feed composition according to the above <11>, wherein component (A) is an anionic surfactant selected from alkyl sulfates, alkylbenzene sulfonates, alkyl sulfosuccinates, and cholates.
<13> The feed composition according to the above <11> or <12>, containing component (A) in an amount of 0.1 parts by mass or more and 50 parts by mass or less relative to 100 parts by mass of component (C).
<14> The feed composition according to any of the above <11> to <13>, wherein an HLB of component (B) is 6 or more and 18 or less.
<15> The feed composition according to any of the above <11> to <14>, wherein component (B) is a nonionic surfactant selected from polyoxyethylene alkyl ethers, sorbitan fatty acid esters, polyoxyethylene sorbitan fatty acid esters, polyoxyethylene fatty acid esters, sucrose fatty acid esters, glycerin fatty acid esters, polyoxyethylene glycerin fatty acid esters, and polyoxyethylene hydrogenated castor oils.
<16> The feed composition according to any of the above <11> to <15>, containing component (B) in an amount of 0.1 parts by mass or more and 20 parts by mass or less relative to 100 parts by mass of component (C).
<17> The feed composition according to any of the above <11> to <16>, wherein component (C) contains plant proteins.
<18> The feed composition according to any of the above <11> to <17>, containing component (C) in an amount of 10 mass% or more, further 20 mass% or more, further 30 mass% or more, and further 40 mass% or more, and 99 mass% or less, further 97 mass% or less, further 90 mass% or less, further 80 mass% or less, further 70 mass% or less, and further 60 mass% or less.
<19> The feed composition according to any of the above <11> to <18>, containing component (A) in an amount of further 0.1 parts by mass or more, further 0.2 parts by mass or more, further 0.5 parts by mass or more, further 1 part by mass or more, further 2 parts by mass or more, and further 3 parts by mass or more, and 50 parts by mass or less, further 40 parts by mass or less, further 30 parts by mass or less, further 20 parts by mass or less, and further 15 parts by mass or less relative to 100 parts by mass of component (C).
<20> The feed composition according to any of the above <11> to <19>, containing component (B) in an amount of 0.1 parts by mass or more, further 0.2 parts by mass or more, further 0.5 parts by mass or more, further 1 part by mass or more, and further 2 parts by mass or more, and 20 parts by mass or less and further 15 parts by mass or less relative to 100 parts by mass of component (C).
<21> The feed composition according to any of the above <11> to <20>, wherein a mass ratio of a content of component (A) to a content of component (B) [(A)/(B)] is 0.7 or more, further 0.9 or more, further 1.0 or more, and further 2.0 or more, and 20 or less, further 10 or less, further 8 or less, further 6 or less, further 5.0 or less, and further 4.0 or less.
<22> The feed composition according to any of the above <11> to <21>, wherein the composition is feed for fish and shellfish farming.
<23> A method for farming fish and shellfish including feeding the feed composition according to any of the above <11> to <22> to the fish and shellfish.
<24> A protein digestion promoter composition for fish farming containing (A) an anionic surfactant [hereinafter referred to as component (A)], (B) a nonionic surfactant [hereinafter referred to as component (B)], and (C) protein [hereinafter referred to as component (C)], wherein a mass ratio of a content of component (A) to a content of component (B) [(A)/(B)] is 0.7 or more and 20 or less.
<25> A method for producing a feed composition including mixing (A) an anionic surfactant [hereinafter referred to as component (A)], (B) a nonionic surfactant [hereinafter referred to as component (B)], and (C) protein [hereinafter referred to as component (C)] at a mass ratio of a content of component (A) to a content of component (B) [(A)/(B)] in a range of 0.7 or more and 20 or less.
<26> A method for farming fish and shellfish including feeding a feed composition to the farmed fish and shellfish, the composition containing (A) an anionic surfactant [hereinafter referred to as component (A)], (B) a nonionic surfactant [hereinafter referred to as component (B)], and (C) protein [hereinafter referred to as component (C)] at a mass ratio of a content of component (A) to a content of component (B) [(A)/(B)] in a range of 0.7 or more and 20 or less.

### Examples

### <Example 1 and comparative example 1>

### [Protein digestibility (In vitro test)]

### (1) Preparation of feed composition

Components (A) and (B) shown in Table 1 were added in their respective amounts in Table 1 to soybean meal as a protein source (from Showa Sangyo Co., Ltd. containing 43 mass% of protein as component (C)), and stirred in a mortar for about 5 minutes to prepare each feed composition.

### (2) Preparation of red seabream extract enzyme

Intestines removed from red seabream (*Pagrus major*), to which pure water was added to obtain a mass ratio of 1:1, were ground in a blender and filtered. The obtained filtrate was used as a red seabream extract enzyme.

### (3) Calculation of protein degradation rate

The feed composition prepared in (1) in an amount of 10 mg on a soybean meal-derived protein basis, 50 µL of the red seabream extract enzyme, and 5 mL of a phosphate buffer (pH 8) were added to a 30-mL eggplant flask, and stirred to prepare a crude treated liquid. 24 hours later, 100 µL of the crude treated liquid was placed in a sampling tube (1.5 mL in capacity), and the sampling tube was scalded for 5 minutes by immersing it in boiling water to heat the entire amount of the crude treated liquid in the sampling tube. The heat-treated sampling tube was centrifuged (at 10000 rpm for 5 minutes) to deproteinize the crude treated liquid, thereby obtaining a protein-digested treated liquid (hereinafter referred to as treated liquid).

Trinitro benzene sulfonic acid from TCI was added to the treated liquid to carry out the reaction at 60°C for an hour, and hydrochloric acid was added and stirred to stop the reaction. The absorbance of the obtained treated liquid at 420 nm was measured. The absorbance at 420 nm was measured, a calibration curve was plotted using tyrosine, and the protein degradation rate was calculated. The relative value with respect to the protein degradation rate in comparative example 1 was used to evaluate the protein digestibility. The results are shown in Table 1. The larger the value of digestibility in Table 1, the more the digestion of proteins can be promoted.

**[Table 1]**

| | | Feed composition | | | | | | | | Digestibility (relative value) (%)*3 |
|---|---|---|---|---|---|---|---|---|---|---|
| | | (A) Anionic surfactant | | (B) Nonionic surfactant | | | (A)/(B) (mass ratio) | Content relative to 100 parts by mass of component (C)*2 | | |
| | | Type | Content (Part by mass*1) | Type | HLB | Content (Part by mass*1) | | Component (A) (part by mass) | Component (B) (part by mass) | |
| Comparative example | 1-1 | - | - | - | - | - | - | - | - | 100 |
| | 1-2 | - | | POE(2)C12 ether | 6.3 | 10 | - | - | 23.3 | 101 |
| Example | 1-1 | Sodium lauryl sulfate | 5.0 | POE(2)C12 ether | 6.3 | 5.0 | 1.0 | 11.6 | 11.6 | 128 |
| | 1-2 | Sodium lauryl sulfate | 5.0 | POE(12)C12 ether | 15.3 | 5.0 | 1.0 | 11.6 | 11.6 | 180 |
| | 1-3 | Sodium lauryl sulfate | 5.0 | POE(43)C12 ether | 16.3 | 5.0 | 1.0 | 11.6 | 11.6 | 168 |
| | 1-4 | Sodium lauryl sulfate | 5.0 | C12 sorbitan fatty acid ester | 8.6 | 5.0 | 1.0 | 11.6 | 11.6 | 134 |
| | 1-5 | Sodium lauryl sulfate | 5.0 | C12EO(6) sorbitan fatty acid ester | 13.3 | 5.0 | 1.0 | 11.6 | 11.6 | 164 |
| | 1-6 | Sodium lauryl sulfate | 5.0 | C12EO(20) sorbitan fatty acid ester | 16.7 | 5.0 | 1.0 | 11.6 | 11.6 | 152 |
| | 1-7 | Sodium lauryl sulfate | 5.0 | C18:1EO(6) sorbitan fatty acid ester | 10 | 5.0 | 1.0 | 11.6 | 11.6 | 143 |
| | 1-8 | Sodium lauryl sulfate | 5.0 | C18:1EO(20) sorbitan fatty acid ester | 15 | 5.0 | 1.0 | 11.6 | 11.6 | 198 |
| | 1-9 | Sodium lauryl sulfate | 5.0 | C10 monoglyceride | 6.5 | 5.0 | 1.0 | 11.6 | 11.6 | 130 |
| | 1-10 | Ammonium lauryl sulfate | 5.2 | C18:1EO(20) sorbitan fatty acid ester | 15 | 5.0 | 1.0 | 12.1 | 11.6 | 189 |
| | 1-11 | Thiamine lauryl sulfate | 10.3 | C18:1EO(20) sorbitan fatty acid ester | 15 | 5.0 | 2.1 | 24.0 | 11.6 | 175 |
| | 1-12 | Sodium lauryl benzene sulfonate | 5.0 | C18:1EO(20) sorbitan fatty acid ester | 15 | 5.0 | 1.0 | 11.6 | 11.6 | 172 |
| | 1-13 | Sodium cholate | 5.0 | C18:1EO(20) sorbitan fatty acid ester | 15 | 5.0 | 1.0 | 11.6 | 11.6 | 131 |
| Comparative example | 1-3 | Thiamine lauryl sulfate | 10.3 | - | - | - | - | 24.0 | 0.00 | 114 |
| | 1-4 | Thiamine lauryl sulfate | 2.1 | C18:1EO(20) sorbitan fatty acid ester | 15 | 9.0 | 0.2 | 4.90 | 20.9 | 128 |
| Example | 1-14 | Thiamine lauryl sulfate | 6.2 | C18:1EO(20) sorbitan fatty acid ester | 15 | 7.0 | 0.9 | 14.4 | 16.3 | 146 |
| | 1-15 | Thiamine lauryl sulfate | 14.5 | C18:1EO(20) sorbitan fatty acid ester | 15 | 3.0 | 4.8 | 33.7 | 7.00 | 162 |
| | 1-16 | Thiamine lauryl sulfate | 18.5 | C18:1EO(20) sorbitan fatty acid ester | 15 | 1.0 | 18.5 | 43.0 | 2.30 | 154 |
| | 1-17 | Thiamine lauryl sulfate | 5.2 | C18:1EO(20) sorbitan fatty acid ester | 15 | 2.5 | 2.1 | 12.1 | 5.80 | 162 |
| | 1-18 | Thiamine lauryl sulfate | 2.1 | C18:1EO(20) sorbitan fatty acid ester | 15 | 1.0 | 2.1 | 4.90 | 2.30 | 149 |
| | 1-19 | Thiamine lauryl sulfate | 1.0 | C18:1EO(20) sorbitan fatty acid ester | 15 | 0.5 | 2.0 | 2.30 | 1.20 | 129 |
| | 1-20 | Thiamine lauryl sulfate | 0.52 | C18:1EO(20) sorbitan fatty acid ester | 15 | 0.25 | 2.1 | 1.20 | 0.60 | 117 |

| | | | | | | | | | | |
|---|---|---|---|---|---|---|---|---|---|---|
| *1: part by mass relative to 100 parts by mass of protein source (soybean meal) *2: content with 43 mass% of (C) protein contained in protein source (soybean meal) taken as 100 parts by mass *3: relative value with comparative example 1-1 taken as 100 | | | | | | | | | | |

The components in the tables are the following. An HLB calculated by Griffin's method is used as an HLB of component (B).

### <Formulation component>

### Component (A): anionic surfactant

· Sodium lauryl sulfate: EMAL 10PT, Kao Corporation
· Ammonium lauryl sulfate: EMAL AD-25R, Kao Corporation
· Thiamine lauryl sulfate: FINE V.B-100, Tsuruya Chemical Industries, Ltd.
· Sodium lauryl benzene sulfonate: NEOPELEX G20, Kao Corporation
· Sodium cholate: FUJIFILM Wako Pure Chemical Corporation

### Component (B): nonionic surfactant

· POE(2)C12 ether: polyoxyethylene (2) lauryl ether (the numeral inside the parentheses is an average number of added moles, the same applies hereinafter), Kao Corporation (HLB 6.3)
· POE(12)C12 ether: polyoxyethylene (12) lauryl ether, Kao Corporation (HLB 15.3)
· POE(43)C12 ether: polyoxyethylene (43) lauryl ether, Kao Corporation (HLB 16.3)
· C12 sorbitan fatty acid ester: RHEODOL SP-L10, Kao Corporation (HLB 8.6)
· C12EO(6) sorbitan fatty acid ester: RHEODOL TW-L106, Kao Corporation (HLB 13.3)
· C12EO(20) sorbitan fatty acid ester: RHEODOL TW-L120, Kao Corporation (HLB 16.7)
· C18:1EO(6) sorbitan fatty acid ester: RHEODOL TW-O106, Kao Corporation (HLB 10)
· C18:1EO(20) sorbitan fatty acid ester: RHEODOL TW-O120, Kao Corporation (HLB 15)
· C10 monoglyceride: SUNSOFT 760H, Taiyo Kagaku Co., Ltd. (HLB 6.5)

### <Example 2 and comparative example 2>

### [Protein digestibility (In vitro test)]

The preparation of the feed compositions, the preparation of the red seabream extract enzyme, and the calculation of the protein degradation rates were performed in the same manner as in example 1 and comparative example 1 except that soybean meal which was the protein source of example 1 was replaced with the protein sources shown in Table 2, and components (A) and (B) were added in their respective amounts shown in Table 2. Components (A) and (B) used are the same as those in example 1 and comparative example 1. The results are shown in Table 2.

**[Table 2]**

| | Feed composition | | | | | | | | | | | Digestibility (relative value) (%)*3 |
|---|---|---|---|---|---|---|---|---|---|---|---|---|
| | Protein source | (A) Anionic surfactant | | (B) Nonionic surfactant | | | (A)/(B) (mass ratio) | Composition of protein source | | Content relative to 100 parts by mass of component (C)*2 | | |
| | | Type | Content (Part by mass*1) | Type | HLB | Content (Part by mass*1) | | Content of component (C) (mass%) | Content of components other than component (C) (mass%) | Component (A) (part by mass) | Component (B) (part by mass) | |
| Comparative example 2-1 | Corn gluten meal | - | - | - | - | - | - | - | - | - | - | 100 |
| Example 2-1 | | Thiamine lauryl sulfate | 2.1 | C18:1EO(20) sorbitan fatty acid ester | 15 | 1.0 | 2.1 | 60 | 40 | 3.5 | 1.7 | 142 |
| Comparative example 2-2 | Rice bran | - | - | - | - | - | - | - | - | - | - | 100 |
| Example 2-2 | | Thiamine lauryl sulfate | 2.1 | C18:1EO(20) sorbitan fatty acid ester | 15 | 1.0 | 2.1 | 19 | 81 | 11.1 | 5.3 | 161 |
| Comparative example 2-3 | wheat bran | | - | | - | - | - | - | - | - | - | 100 |
| Example 2-3 | | Thiamine lauryl sulfate | 2.1 | C18:1EO(20) sorbitan fatty acid ester | 15 | 1.0 | 2.1 | 15 | 85 | 14.0 | 6.7 | 133 |
| Comparative example 2-4 | Barley | - | - | - | - | - | - | - | - | - | - | 100 |
| Example 2-4 | | Thiamine lauryl sulfate | 2.1 | C18:1EO(20) sorbitan fatty acid ester | 15 | 1.0 | 2.1 | 11 | 89 | 19.1 | 9.1 | 138 |
| Comparative example 2-5 | Fish meal | - | - | - | - | - | - | - | - | - | - | 100 |
| Example 2-5 | | Thiamine lauryl sulfate | 2.1 | C18:1EO(20) sorbitan fatty acid ester | 15 | 1.0 | 2.1 | 61 | 39 | 3.4 | 1.6 | 125 |

| | | | | | | | | | | | | |
|---|---|---|---|---|---|---|---|---|---|---|---|---|
| *1: part by mass relative to 100 parts by mass of protein source *2: content with component (C) contained in protein source (net amount of protein) taken as 100 parts by mass *3: relative value with comparative example 2-n taken as 100 (n = 1-5) | | | | | | | | | | | | |

### <Example 3 and comparative example 3>

### [Growth performance (In vivo test)]

### (1) Preparation of feed composition

50 g of tap water and components (A) and (B) shown in Table 3 in their respective amounts in Table 3 were added to a mixture as a protein source of 25 g of soybean meal (from Showa Sangyo Co., Ltd. containing 43 mass% of protein as component (C)) and 40 g of fish meal (from YOSHIDA SHIRYO, K.K. containing 61 mass% of protein as component (C)). After thorough mixing, molding was performed by a single screw extruding granulator with a screen diameter of 3 mm (the number of revolutions 50 rpm) to mold single moist pellets. The moisture content was 42-44%. Note that components (A) and (B) used are the same as those in example 1 and comparative example 1. For the measurement of the moisture content, a halogen moisture analyzer (from METTLER) was used, and the moisture content in 1 g of the feed was measured.

### (2) Method for feeding feed composition

Red seabream fry with a size of about 5 cm were used and reared under the conditions of satiation feeding twice a day in the morning and evening and a water temperature of 20 degrees ± 1.5°C for 28 days with the start of feeding as day 0. Note that the fed red seabream fry ingested all the feed compositions of the present invention without any problem. Further, it was confirmed that the red seabream fry which ingested the feed compositions of the present invention were able to grow without experiencing adverse conditions such as diarrhea or the like.

### (3) Measurement of weight gain rate

The weight of the fish as of day 0 and the weight of the fish as of day 28 were measured. The value calculated by the following formula was used as the weight gain rate: Weight gain rate = {(weight as of day 28)/(weight as of day 0) × 100} - 100

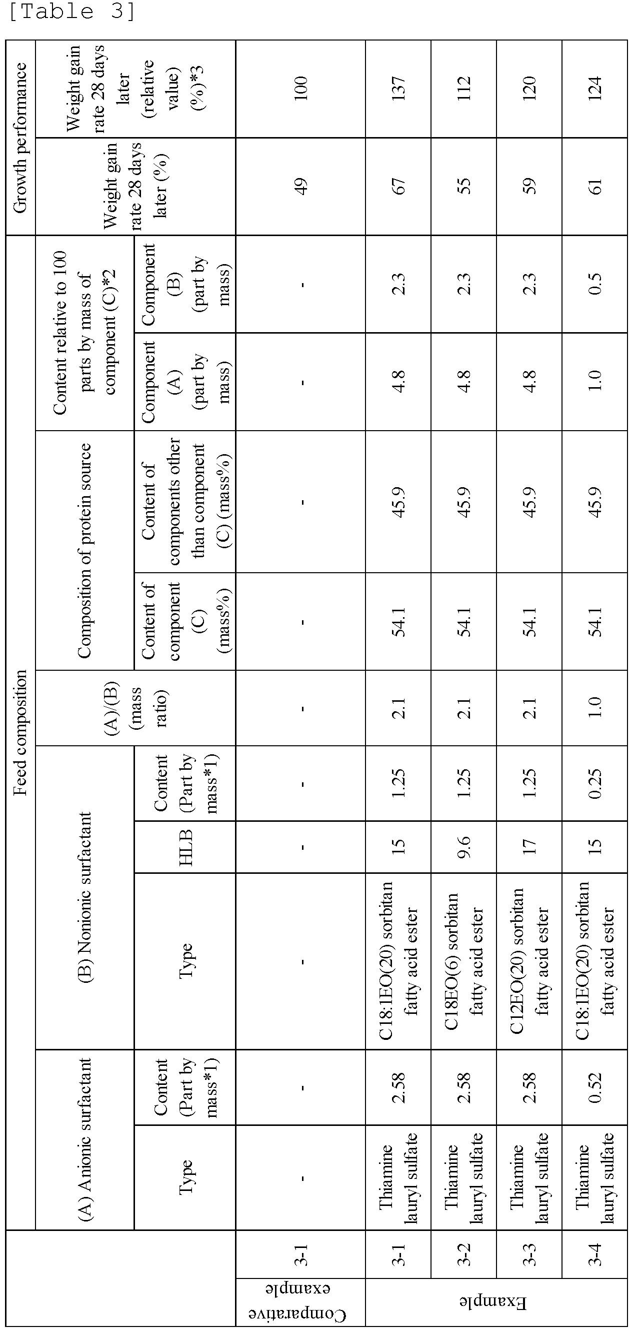

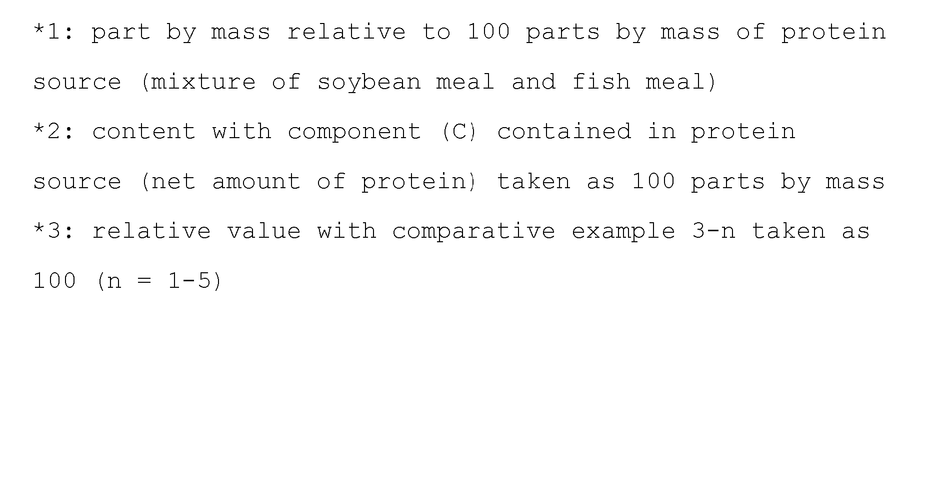

## Claims

1. A feed additive composition consisting of (A) an anionic surfactant [hereinafter referred to as component (A)] and (B) a nonionic surfactant [hereinafter referred to as component (B)], wherein a mass ratio of a content of the component (A) to a content of the component (B) [(A)/(B)] is 0.7 or more and 20 or less.

2. The feed additive composition according to claim 1, wherein the component (A) is an anionic surfactant selected from alkyl sulfates, alkylbenzene sulfonates, alkyl sulfosuccinates, and cholates.

3. The feed additive composition according to claim 1 or 2, wherein an HLB of the component (B) is 6 or more and 18 or less.

4. A feed composition comprising (A) an anionic surfactant [hereinafter referred to as component (A)], (B) a nonionic surfactant [hereinafter referred to as component (B)], and (C) protein [hereinafter referred to as component (C)], wherein a mass ratio of a content of the component (A) to a content of the component (B) [(A)/(B)] is 0.7 or more and 20 or less.

5. The feed composition according to claim 4, wherein the component (A) is an anionic surfactant selected from alkyl sulfates, alkylbenzene sulfonates, alkyl sulfosuccinates, and cholates.

6. The feed composition according to claim 4 or 5, comprising the component (A) in an amount of 0.1 parts by mass or more and 50 parts by mass or less relative to 100 parts by mass of the component (C).

7. The feed composition according to any one of claims 4 to 6, wherein an HLB of the component (B) is 6 or more and 18 or less.

8. The feed composition according to any one of claims 4 to 7, comprising the component (B) in an amount of 0.1 parts by mass or more and 20 parts by mass or less relative to 100 parts by mass of the component (C).

9. The feed composition according to any one of claims 4 to 8, wherein the component (C) comprises plant proteins.

10. The feed composition according to any one of claims 4 to 9, wherein the composition is feed for fish and shellfish farming.

11. A protein digestion promoter composition for fish farming comprising (A) an anionic surfactant [hereinafter referred to as component (A)], (B) a nonionic surfactant [hereinafter referred to as component (B)], and (C) protein [hereinafter referred to as component (C)], wherein a mass ratio of a content of the component (A) to a content of the component (B), (A)/(B), is 0.7 or more and 20 or less.

12. The protein digestion promoter composition for fish farming according to claim 11, wherein the component (A) is an anionic surfactant selected from alkyl sulfates, alkylbenzene sulfonates, alkyl sulfosuccinates, and cholates.

13. The protein digestion promoter composition for fish farming according to claim 11 or 12, wherein an HLB of the component (B) is 6 or more and 18 or less.

14. A method for producing a feed composition comprising mixing (A) an anionic surfactant [hereinafter referred to as component (A)], (B) a nonionic surfactant [hereinafter referred to as component (B)], and (C) protein [hereinafter referred to as component (C)] at a mass ratio of a content of the component (A) to a content of the component (B), (A)/(B), in a range of 0.7 or more and 20 or less.

15. A method for farming fish and shellfish comprising feeding a feed composition to the farmed fish and shellfish, the composition containing (A) an anionic surfactant [hereinafter referred to as component (A)], (B) a nonionic surfactant [hereinafter referred to as component (B)], and (C) protein [hereinafter referred to as component (C)] at a mass ratio of a content of the component (A) to a content of the component (B), (A)/(B), in a range of 0.7 or more and 20 or less.
